# EUROPÄISCHE PATENTSCHRIFT

(11) **EP 2 118 190 B1**
(45) Veröffentlichungstag und Bekanntmachung des Hinweises auf die Patenterteilung: **14.12.2011**
(21) Anmeldenummer: 08707329.2
(22) Anmeldetag: 26.01.2008
(51) Int. Cl.: C08K 3/04

(54) **RUSS-GEFÜLLTE POLYURETHANE MIT HOHER DIELEKTRIZITÄTSKONSTANTE UND DURCHSCHLAGFESTIGKEIT**
CARBON BLACK-FILLED POLYURETHANES WITH HIGH DIELECTRIC CONSTANT AND DIELECTRIC STRENGTH
POLYURÉTHANES REMPLIS DE NOIR DE CARBONE AYANT UNE CONSTANTE DIÉLECTRIQUE ÉLEVÉE ET UNE RÉSISTANCE AU PERCEMENT ÉLEVÉE

(30) Priorität: 07.02.2007 DE 102007005960
(43) Veröffentlichungstag der Anmeldung: 18.11.2009
(73) Patentinhaber: Bayer MaterialScience AG, 51368 Leverkusen (DE)
(72) Erfinder: JENNINGER, Werner, 50674 Köln (DE); KÖHLER, Burkhard, 34289 Zierenberg (DE); WAGNER, Joachim, 51061 Köln (DE)
(86) Internationale Anmeldenummer: PCT/EP2008/000623
(87) Internationale Veröffentlichungsnummer: WO 2008/095621

(56) Entgegenhaltungen:
- WO-A-98/14492
- WO-A-02/088225
- WO-A-2007/075330
- US-B1- 6 433 996

## Beschreibung

Die Erfindung betrifft Ruß-gefüllte, vorzugsweise weiche Polyurethane, die sich durch eine hohe Dielektrizitätskonstante und Durchschlagsfestigkeit auszeichnen, und aus Polyalkylenoxiden, aufgebaut sind.

Es bestand die Aufgabe, Polyurethan-Compounds mit hoher Dielektrizitätskonstante und hoher elektrischer Durchschlagsfestigkeit bereitzustellen, die z.B. als Dielektrikum in Kondensatoren von Interesse sind.

Leitfähige Ruß-gefüllte Polyurethane mit hohem Modul werden von Novak in European Polymer Journal (2004) 40 (7), 1417-1422 beschrieben. Elektrisch leitfähige Compounds scheiden aber zur Verwendung als Dielektrikum aus.

In verschiedenen Literaturstellen werden Compounds, hergestellt aus Ruß und wässrigen Polyurethandispersionen, beschrieben: Material Letters (2004) 58 (27-28), 3606-3609; Chinese Chemical Letters (2004) 15 (8), 1001-1004; Sensors and Actuators, B:Chemical (2005) B105 (2), 187-193.

Die bekannten Polyurethanmischungen zeigen schon bei geringem Ruß-Gehalt von 0,7% eine Perkolation, wobei die Leitfähigkeit über einen breiten Bereich bis über 10% Ruß-Gehalt ansteigt und stark von der Einwirkung von Gasen und Lösungsmitteldämpfen beeinflusst wird. Dieses Verhalten macht sie geeignet für die Anwendung als Gas-Sensoren aber weniger geeignet als Dielektrikum.

Altafim beschreibt in Materials Research (2003) 6 (2), 187-191 Ruß-gefüllte Polyurethane, die als Polyolkomponente Ricinusöl enthalten. Solche Compounds haben jedoch einen zu hohen Modul, da das OH-Equivalentgewicht des Ricinusöls 350 g/eq beträgt.

Die US 2006096694-A beschreibt nicht leitende Klebstoffe mit hoher Dielektrizitätskonstante, aber hohem Modul, der durch enthaltene Polyester-Polyole verursacht wird. Wünschenswert für einige spezielle Anwendungen sind jedoch Compounds mit niedrigem Modul.

Es wurde gefunden, dass Ruß-gefüllte Polyurethane, die durch DMC (Double Metal Cyanide)-Katalyse hergestellte Polyether als Baustein enthalten, sich durch eine hohe Dielektrizitätskonstante und elektrische Durchschlagsfestigkeit auszeichnen. Vergleichbare Compounds, deren Polyurethane Polyalkylenoxide, die durch Alkalimetallhydroxid-Katalyse hergestellt wurden oder Poly-THF enthalten, erreichen bei gegebener Dielektrizitätskonstante nicht die Durchschlagsfestigkeit der neuen Compounds.

Gegenstand der Erfindung sind Energiewandler aufweisend Ruß-gefüllte Polyurethanmassen als Dielektrikum wobei die Ruß-gefüllten Polyurethanmassen wenigstens bestehen aus
A) 99,1 - 70 Gew.-% Polyetherurethane, in die Polyolkomponenten eingebaut sind, wobei die Polyolkomponenten zu
   a) 50 - 100 Gew.-% aus durch DMC-Katalyse hergestellten Polyalkylenoxiden, insbesondere Propylenoxiden und
   b) 0-50 Gew.-% aus von Katalysatorresten freien Polyolen, insbesondere solchen, die destillativ oder durch Umkristallisation gereinigt sind, oder nicht durch ringöfnende Polymerisation von Sauerstoffheterocyclen hergestellt wurden,
   aufgebaut sind
   und
B) 0,1-30 Gew.-% Ruß.

Beispiele für die in den neuen Polyurethanen verwendeten Polyolkomponenten a) sind die in WO 97/29146, EP-A 700 949 und EP-A 761 708 beschriebenen Polyole. Es handelt sich um Polyalkylenoxide die durch ringöffnende Polymersation von Epoxiden zugänglich sind, wobei 85-100%, vorzugsweise 100% Propylenoxid, eingesetzt wird und der Rest aus Butylenoxid, Hexenoxid, Vinyloxiran, Allylglycidylether, Butylglycidylether, Ethylhexylglycidylether, Epichlorhydrin, Ethylenoxid, Phenylglycidylether oder Kresylglycidylether bestehen kann. Als Katalysator werden Doppelmetallcyanid-Komplexe (DMC), z.B. Zinkhexacyanokobaltat, eingesetzt. Die vorteilhafte Verwendung solcher Polyalkylenoxide in Polyurethanen wurde schon in der US 6825376 und US 2004067315 beschrieben, wobei aber die höhere Selektivität solcher Polyole bei der Reaktion mit Isocyanat für die angestrebte Anwendung ausschlaggebend war.

Die Molmasse (Zahlenmittel Mn) der in den erfindungsgemäß verwendeten PU-Mischungen eingebauten Polyolkomponenten a) beträgt bevorzugt 1000 - 14000 g/mol, insbesondere vorzugsweise 1500 - 8500 g/mol. Die Funktionalität beträgt bevorzugt 2-6, insbesondere vorzugsweise 2.

Als Polyolkomponente b) werden bevorzugt Ethylenglykol, Diethylenglykol, Triethylenglykol, Tetraethylenglykol, Propylenglykol, Dipropylenglykol, Tripropylenglykol, Tetrapropylenglykol, TMP, Neopentylglykol, Pentaerythrit, Cyclohexandimethanol, Butylenglykol, Ricinusöl, dehydratisiertes Ricinusöl, hydriertes Ricinusöl, Dimerdiol, Hexandiol. Decandiol, Dodecandiol, hydroxyfunktionelles Oligobutadien, hydriertes hydroxyfunktionelles Oligobutadien, Glycerin oder TMP-monoallylether eingesetzt.

Die Herstellung der Polyurethane A) erfolgt bevorzugt durch Reaktion der Polyolkomponenten a) und ggf. b) mit 1,0-1,1 Equivalenten von Polyisocyanaten bei einer Temperatur von 15 - 120°C, vorzugsweise 18 - 80°C in Gegenwart oder Abwesenheit von Katalysator der NCO-OH-Reaktion, wie Zinnverbindungen oder Aminen. Die Mischung der Komponenten a), gegebenenfalls b), Polyisocyanat und B) erfolgt insbesondere in geeigneten Mischgeräten, die eine hohe Scherenergie eintragen können wie z.B. im Speed-Mixer, und ggf. durch zusätzliche Einwirkung von Ultraschall.

Als Polyisocyanate werden bevorzugt solche aus der folgenden Reihe eingesetzt: HDI, Trimethyl-HDI, IPDI, Dodecahydro-MDI, Norbornandiisocyanat, Bisisocyanatomethylcyclohexan, Bisisocyanatomethylbenzol, TMXDI, 2,4-TDI oder 2,6-TDI oder deren Gemische, 2,2-MDI, 2,4-MDI oder 4,4-MDI oder deren Gemische, 3-Kem- oder Oligo-MDI-haltige MDI-Typen, wobei aliphatische Isocyanate bevorzugt sind, die Carbodiimide oder 4- oder 6-Ring-Heterocyclen enthaltenden Di- oder Trimere der genannte Diisocyanate, deren Addukte an niedermolekulare Polyole, wie TMP, Diethylengylkol oder Dipropylenglykol, deren Urethan- oder Allophanat-Präpolymere an Polyole, die der oben beschriebenen Komponente a) entsprechen. Besonders bevorzugt sind Allophanat-Präpolymere, wie sie in US 2005222365 beschrieben sind, wobei in einer bevorzugten Ausführungsform als Polyole Polyalkylenoxide eingesetzt werden, die der oben beschriebenen Komponente a) entsprechen. Insbesondere kann ein Allophanat-Präpolymer aus einem nach DMC-Katalyse hergestelltem Polypropylenoxid der Molmasse im Bereich von Mn = 2000 und HDI, wobei die Allophanatisierung vorzugsweise mit Zinkoctoat katalysiert wird, vorteilhaft eingesetzt werden, das der idealisierten Formel I entspricht: 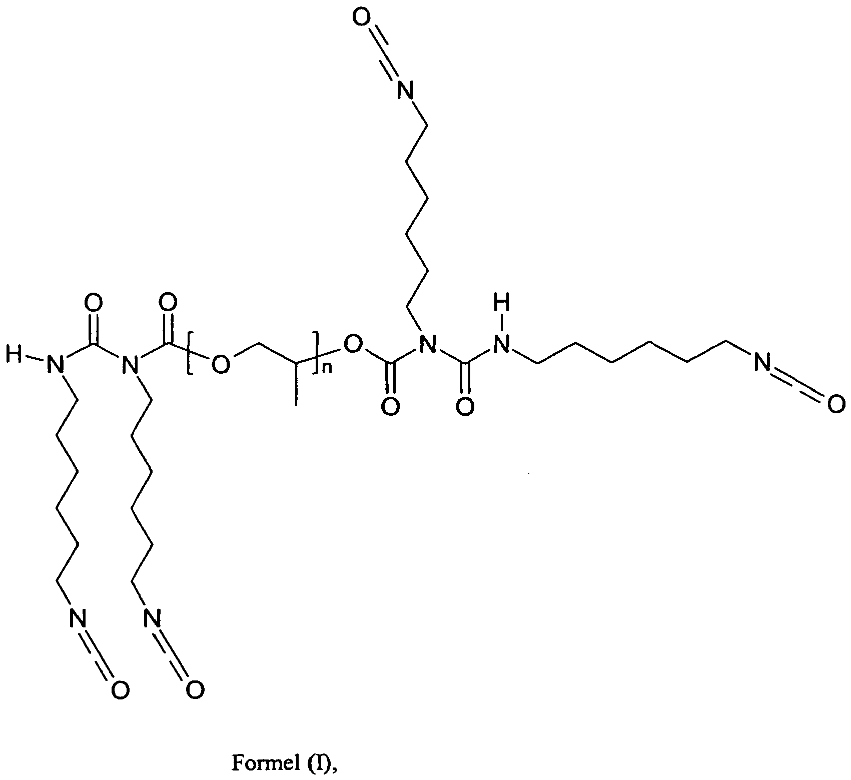 wobei n eine Zahl von 30 bis 38 bedeutet.

Ruße der Komponente B) sind insbesondere feindisperse Russtypen, wie sie beispielsweise bei der Degussa AG kommerziell bezogen werden können. Sinnvoll eingesetzt werden Rußtypen mit einer mittleren Teilchengröße von höchstens 1 µm, bevorzugt höchstens 100 nm und besonders bevorzugt höchstens 50 nm. Die Ruße sollen bevorzugt gleichzeitig eine große BET-Oberfläche aufweisen, wobei die BET-Oberfläche größer insbesondere als 250 m²/g, bevorzugt größer 500 m²/g und besonders bevorzugt größer 900 m²/g ist.

Die erfindungsgemäßen Ruß-gefüllten Polyurethane können als Dielektrikum in Energiewandlern von mechanischer in elektrische und von elektrischer in mechanische Energie eingesetzt werden. Solche Energiewandler sind z.B. in der US -A- 6343129 beschrieben.

### Beispiel 1 (Vergleichsbeispiel)

Alle flüssigen Rohstoffe wurden in einem dreistufigen Verfahren sorgfältig unter Argon entgast, der Ruß wurde über ein 125µm Sieb gesiebt. 10g Terathane 650 (INVISTA GmbH, D-65795 Hatterheim, Poly-THF der Molmasse Mn = 650) wird mit 0,596 g RuB (Ketjenblack EC 300 J, Produkt der Akzo Nobel AG) in einem 60 ml Einweg-Mischbehälter (APM-Technika AG, Best. Nr. 1033152) eingewogen und im Speedmixer (Produkt der Fa. APM-Technika AG, CH-9435 Heerbrugg; Vertrieb D: Hauschild; Typ DAC 150 FVZ) 3 min bei 3000 Upm zu einer homogenen Paste vermischt. Anschließend wird 0,005 g Dibutylzinndilaurat (Metacure® T-12, Air Products and Chemicals, Inc.) und 6,06 g des Isocyanates N3300 (Produkt der BayermaterialScience AG) dazu gewogen und 1 min bei 3000 Upm im Speedmixer vermischt. Die Reaktionspaste wird auf eine Glasplatte gegossen und mit einem Rakel der Nassschichtdicke 500 µm zu einem homogenen Film des Feststoffgehaltes 2% ausgezogen. Der Film wird anschließend 16 h bei 80°C getempert.

Die Eigenschaften des getemperten Filmes sind in der nachstehenden Tabelle 1 wiedergegeben.

### Beispiel 2 (erfindungsgemäß)

Alle flüssigen Rohstoffe wurden in einem dreistufigen Verfahren sorgfältig unter Argon entgast, der Ruß wurde über ein 125 µm Sieb gesiebt. 10g Arcol PPG 2000 (Produkt der BMS AG, DMCkatalysiertes Polypropylenoxid der mittleren Molmasse Mn=2000) wird mit 0,636 g Ruß (Typ Ketjenblack EC 300) in einem 60 ml Einweg-Mischbehälter eingewogen und im Speedmixer 3 min bei 3000 Upm zu einer homogenen Paste vermischt. Anschließend wird 0,005 g Dibutylzinndilaurat und 7,13 g des Isocyanates Desmodur XP 2599 (Produkt der Bayer MaterialScience AG, Allophanat-Präpolymer der Formel I, wobei Arcol PPG 2000 als Polyalkylenoxid eingesetzt wurde) dazu gewogen und 1 min bei 3000 Upm im Speedmixer vermischt. Die Reaktionspaste wird auf eine Glasplatte gegossen und mit einem Rakel der Nassschichtdicke 500 µm zu einem homogenen Film des Feststoffgehaltes 2% ausgezogen. Der Film wird anschließend 16 h bei 80°C getempert.

Die Eigenschaften des getemperten Filmes sind in der nachstehenden Tabelle 1 wiedergegeben.

**Tabelle 1: Messdaten**

| **Beispiel** | **Feststoffgehalt %** | **DC-Dielektrizitätskonstante** | **DC-Volumen-Leitfähigkeit S/cm** | **Durchschlagsfeldstärke MV/m** |
|---|---|---|---|---|
| 1 | 2 | <4 | 5E-6 | 5 |
| 2 | 2 | 700 | 6E-11 | 30 |

Der Vorteil der erfindungsgemäßen Polyurethanmassen zeigt sich in der wesentlich höheren Dielektrizitätskonstante und einer wesentlich niedrigeren Volumenleitfähigkeit bei deutlich höherer Durchschlagsfeldstärke.

## Patentansprüche

1. Energiewandler aufweisend Ruß-gefüllte Polyurethanmassen als Dielektrikum wobei die Ruß-gefüllten Polyurethanmassen wenigstens bestehen aus
A) 99,1 -70 Gew.-% Polyetherurethane, in die Polyolkomponenten eingebaut sind, wobei die Polyolkomponenten zu
a) 50-100 Gew.-% aus durch DMC-Katalyse hergestellten Polyalkylenoxiden, insbesondere Poylpropylenoxiden, und
b) 0-50 Gew.-% aus von Katalysatorresten freien Polyolen, insbesondere solchen, die destillativ oder durch Umkristallisation gereinigt sind, oder solchen, die nicht durch ringöffnende Polymerisation von Sauerstoffheterocyclen hergestellt wurden,
aufgebaut sind
und
B) 0,1-30 Gew.-% Ruß.

2. Energiewandler nach Anspruch 1, **dadurch gekennzeichnet, dass** die Polyolkomponente a) 100 Gew.-% beträgt.

3. Energiewandler nach Anspruch 1 oder 2, **dadurch gekennzeichnet, dass** als Isocyanate Allophanat-Präpolymere eingesetzt werden.

4. Energiewandler nach wenigstens einem der Ansprüche 1 bis 3, **dadurch gekennzeichnet, dass** als Isocyanate Allophanat-Präpolymere eingesetzt werden, die als Polyolkomponente unter DMC-Katalyse hergestellte Polyalkylenoxide enthalten.

5. Energiewandler nach wenigstens einem der Ansprüche 1 bis 4, **dadurch gekennzeichnet, dass** als Isocyanat ein Allophanat-Präpolymer nach Formel (I) 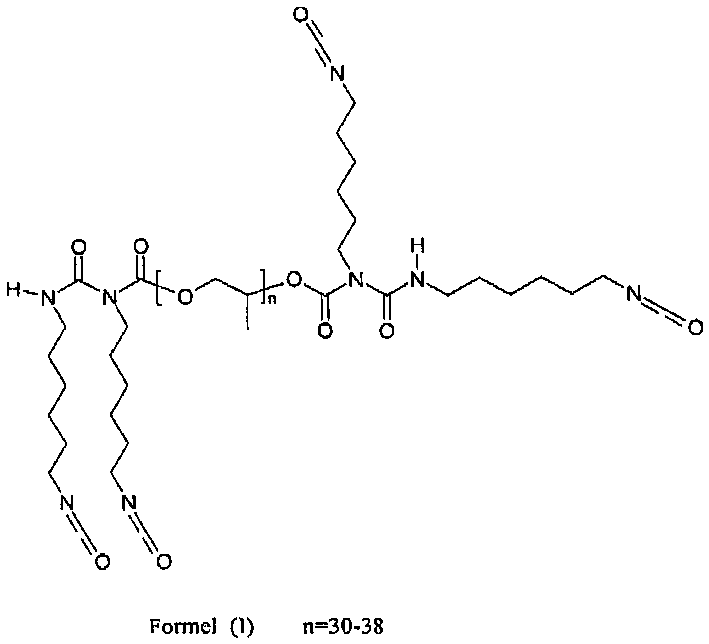 eingesetzt wird und/oder dass das Polyurethan auf einem Präpolymer basiert, wobei das dem Präpolymer zu Grunde liegende Polypropylenoxid durch DMC-Katalyse hergestellt ist.

6. Verwendung Ruß-gefüllter Polyurethanmassen als Dielektrikum in Energiewandlern zur Umwandlung von mechanischer in elektrische und von elektrischer in mechanische Energie, wobei die Ruß-gefüllten Polyurethanmassen wenigstens bestehen aus
A) 99,1 - 70 Gew.-% Polyetherurethane, in die Polyolkomponenten eingebaut sind, wobei die Polyolkomponenten zu
a) 50-100 Gew.-% aus durch DMC-Katalyse hergestellten Polyalkylenoxiden, insbesondere Poylpropylenoxiden, und
b) 0-50 Gew.-% aus von Katalysatorresten freien Polyolen, insbesondere solchen, die destillativ oder durch Umkristallisation gereinigt sind, oder solchen, die nicht durch ringöffnende Polymerisation von Sauerstoffheterocyclen hergestellt wurden,
aufgebaut sind
und
B) 0,1-30 Gew.-% Ruß.

7. Elektrischer Kondensator aufweisend Ruß-gefüllte Polyurethanmassen als Dielektrikum, wobei die Ruß-gefüllten Polyurethanmassen wenigstens bestehen aus
A) 99,1 - 70 Gew.-% Polyetherurethane, in die Polyolkomponenten eingebaut sind, wobei die Polyolkomponenten zu
a) 50-100 Gew.-% aus durch DMC-Katalyse hergestellten Polyalkylenoxiden, insbesondere Poylpropylenoxiden, und
b) 0-50 Gew.-% aus von Katalysatorresten freien Polyolen, insbesondere solchen, die destillativ oder durch Umkristallisation gereinigt sind, oder solchen, die nicht durch ringöffnende Polymerisation von Sauerstoffbeterocyclen hergestellt wurden,
aufgebaut sind
und
B) 0,1-30 Gew.-% Ruß.

8. Polyurethane nach Anspruch 7, **dadurch gekennzeichnet, dass** die Polyolkomponente a) 100 Gew.-% beträgt

9. Polyurethane nach Anspruch 7 oder 8, **dadurch gekennzeichnet, dass** als Isocyanate Allophanat-Präpolymere eingesetzt werden.

10. Polyurethane nach wenigstens einem der Ansprüche 7 bis 9, **dadurch gekennzeichnet, dass** als Isocyanate Allophanat-Präpolymere eingesetzt werden, die als Polyolkomponente unter DMC-Katalyse hergestellte Polyalkylenoxide enthalten.

11. Polyurethane nach wenigstens einem der Ansprüche 7 bis 10, **dadurch gekennzeichnet, dass** als Isocyanat ein Allophanat-Präpolymer nach Formel (I) 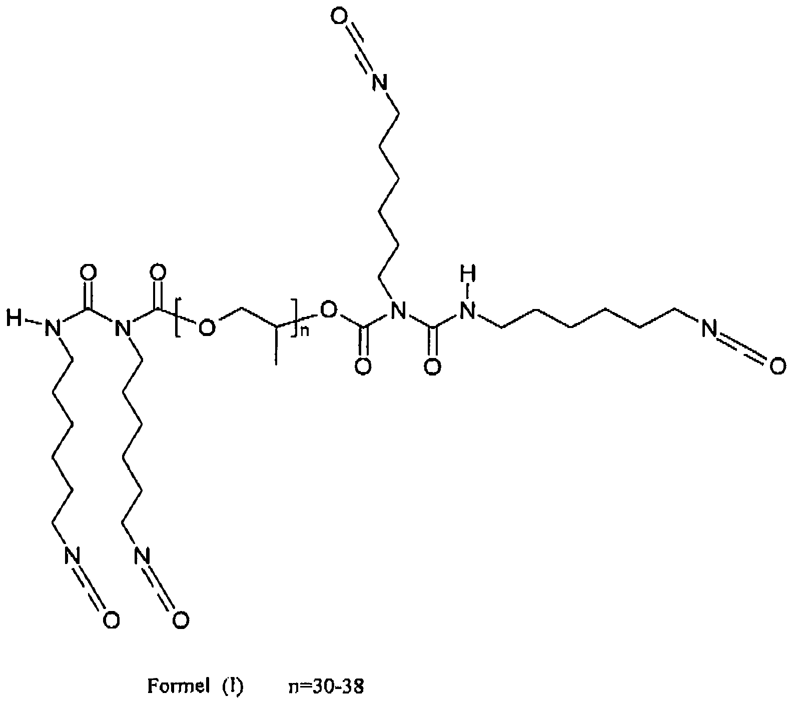 eingesetzt wird und/oder dass das Polyurethan auf einem Präpolymer basiert, wobei das dem Präpolymer zu Grunde liegende Polypropylenoxid durch DMC-Katalyse hergestellt ist.

## Claims

1. Energy converter having carbon-black-filled polyurethane compositions as dielectric, where the carbon-black-filled polyurethane compositions are at least composed of
A) from 99.1 to 70% by weight of polyether urethanes into which polyol components have been incorporated, where the polyol components are composed of
a) from 50 to 100% by weight of polyalkylene oxides produced via DMC catalysis, in particular polypropylene oxides, and
b) from 0 to 50% by weight of polyols free from catalyst residues, in particular those which have been purified by distillation or via recrystallization, or those which have not been produced via ring-opening polymerization of oxygen heterocycles,
and
B) from 0.1 to 30% by weight of carbon black.

2. Energy converter according to Claim 1, **characterized in that** polyol component a) amounts to 100% by weight.

3. Energy converter according to Claim 1 or 2, **characterized in that** isocyanates used comprise allophanate prepolymers.

4. Energy converter according to at least one of Claims I to 3, **characterized in that** isocyanates used comprise allophanate prepolymers which comprise, as polyol component, polyalkylene oxides produced using DMC catalysis.

5. Energy converter according to at least one of Claims 1 to 4, **characterized in that** isocyanate used comprises an allophanate prepolymer according to formula (I) 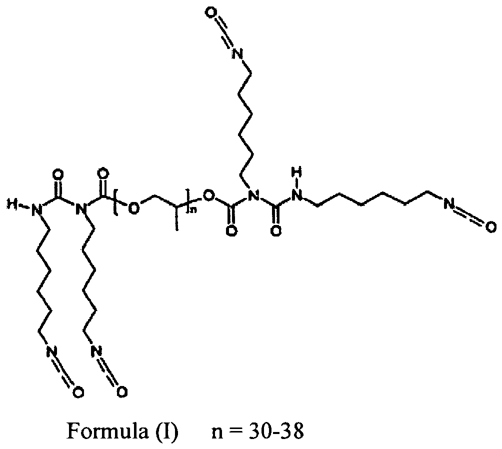 and/or the polyurethane is based on a prepolymer, where the polypropylene oxide on which the prepolymer is based has been produced via DMC catalysis.

6. Use of carbon-black-filled polyurethane compositions as dielectric in energy converters for converting mechanical into electrical energy and electrical into mechanical energy, where the carbon-black-filled polyurethane compositions are at least composed of
A) from 99.1 to 70% by weight of polyether urethanes into which polyol components have been incorporated, where the polyol components are composed of
a) from 50 to 100% by weight of polyalkylene oxides produced via DMC catalysis, in particular polypropylene oxides, and
b) from 0 to 50% by weight of polyols free from catalyst residues, in particular those which have been purified by distillation or via recrystallization, or those which have not been produced via ring-opening polymerization of oxygen heterocycles,
and
B) from 0.1 to 30% by weight of carbon black.

7. Electrical capacitor having carbon-black-filled polyurethane compositions as dielectric, where the carbon-black-filled polyurethane compositions are at least composed of
A) from 99.1 to 70% by weight of polyether urethanes into which polyol components have been incorporated, where the polyol components are composed of
a) from 50 to 100% by weight of polyalkylene oxides produced via DMC catalysis, in particular polypropylene oxides, and
b) from 0 to 50% by weight of polyols free from catalyst residues, in particular those which have been purified by distillation or via recrystallization, or those which have not been produced via ring-opening polymerization of oxygen heterocycles,
and
B) from 0.1 to 30% by weight of carbon black.

8. Polyurethanes according to Claim 7, **characterized in that** polyol component a) accounts for 100% by weight.

9. Polyurethanes according to Claim 7 or 8, **characterized in that** isocyanates used comprise allophanate prepolymers.

10. Polyurethanes according to at least one of Claims 7 to 9, **characterized in that** isocyanates used comprise allophanate prepolymers which comprise, as polyol component, polyalkylene oxides produced using DMC catalysis.

11. Polyurethanes according to at least one of Claims 7 to 10, **characterized in that** isocyanate used comprises an allophanate prepolymer according to formula (I) 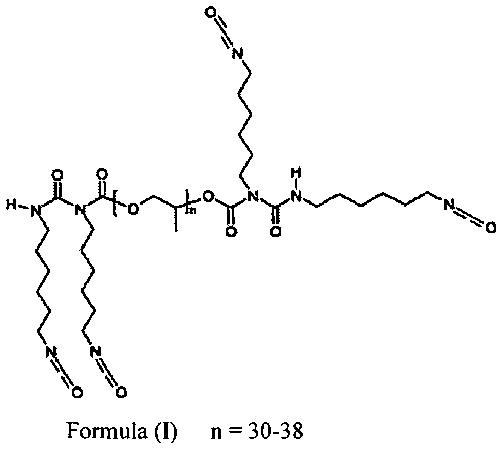 and/or the polyurethane is based on a prepolymer, where the polypropylene oxide on which the prepolymer is based has been produced via DMC catalysis.

## Revendications

1. Convertisseur d'énergie comprenant des compositions de polyuréthane remplies avec du noir de carbone en tant que diélectrique, les compositions de polyuréthane remplies avec du noir de carbone étant au moins constituées par
A) 99,1 à 70 % en poids de polyéther-uréthanes, dans lesquels des composants polyol sont incorporés, les composants polyol étant formés par
a) 50 à 100 % en poids d'oxydes de polyalkylène fabriqués par catalyse DMC, notamment d'oxydes de polypropylène, et
b) 0 à 50 % en poids de polyols exempts de résidus catalytiques, notamment qui sont purifiés par distillation ou par recristallisation ou qui n'ont pas été fabriqués par polymérisation par ouverture de cycle d'hétérocycles oxygénés,
et
B) 0,1 à 30 % en poids de noir de carbone.

2. Convertisseur d'énergie selon la revendication 1, **caractérisé en ce que** le composant polyol a) est de 100 % en poids.

3. Convertisseur d'énergie selon la revendication 1 ou 2, **caractérisé en ce que** des prépolymères d'allophanate sont utilisés en tant qu'isocyanates.

4. Convertisseur d'énergie selon au moins l'une quelconque des revendications 1 à 3, **caractérisé en ce que** des prépolymères d'allophanate qui contiennent en tant que composant polyol des oxydes de polyalkylène fabriqués sous catalyse DMC sont utilisés en tant qu'isocyanates.

5. Convertisseur d'énergie selon au moins l'une quelconque des revendications 1 à 4, **caractérisé en ce qu'**un prépolymère d'allophanate de formule (I) 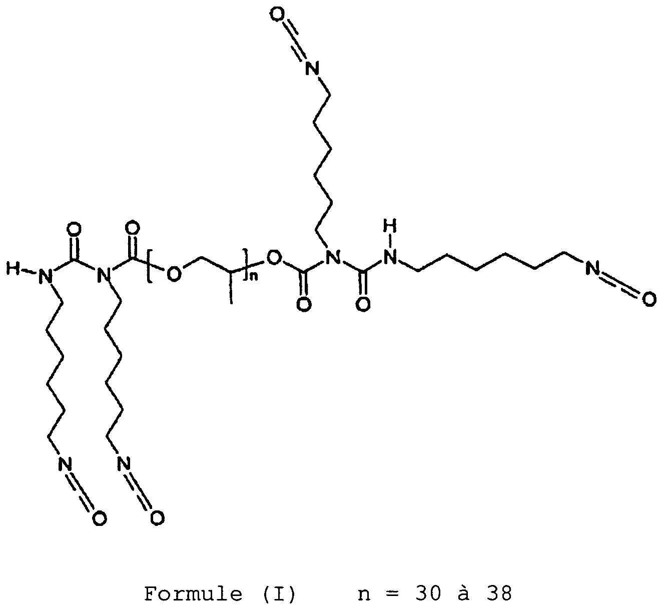 est utilisé en tant qu'isocyanate et/ou **en ce que** le polyuréthane est à base d'un prépolymère, l'oxyde de polypropylène à la base du prépolymère étant fabriqué par catalyse DMC.

6. Utilisation de compositions de polyuréthane remplies avec du noir de carbone en tant que diélectrique dans des convertisseurs d'énergie pour la conversion d'énergie mécanique en électrique et électrique en mécanique, les compositions de polyuréthane remplies avec du noir de carbone étant au moins constituées par
A) 99,1 à 70 % en poids de polyéther-uréthanes, dans lesquels des composants polyol sont incorporés, les composants polyol étant formés par
a) 50 à 100 % en poids d'oxydes de polyalkylène fabriqués par catalyse DMC, notamment d'oxydes de polypropylène, et
b) 0 à 50 % en poids de polyols exempts de résidus catalytiques, notamment qui sont purifiés par distillation ou par recristallisation ou qui n'ont pas été fabriqués par polymérisation par ouverture de cycle d'hétérocycles oxygénés,
et
B) 0,1 à 30 % en poids de noir de carbone.

7. Condensateur électrique comprenant des compositions de polyuréthane remplies avec du noir de carbone en tant que diélectrique, les compositions de polyuréthane remplies avec du noir de carbone étant au moins constituées par
A) 99,1 à 70 % en poids de polyéther-uréthanes, dans lesquels des composants polyol sont incorporés, les composants polyol étant formés par
a) 50 à 100 % en poids d'oxydes de polyalkylène fabriqués par catalyse DMC, notamment d'oxydes de polypropylène, et
b) 0 à 50 % en poids de polyols exempts de résidus catalytiques, notamment qui sont purifiés par distillation ou par recristallisation ou qui n'ont pas été fabriqués par polymérisation par ouverture de cycle d'hétérocycles oxygénés,
et
B) 0,1 à 30 % en poids de noir de carbone.

8. Polyuréthanes selon la revendication 7, **caractérisés en ce que** le composant polyol a) est de 100 % en poids.

9. Polyuréthanes selon la revendication 7 ou 8, **caractérisés en ce que** des prépolymères d'allophanate sont utilisés en tant qu'isocyanates.

10. Polyuréthanes selon au moins l'une quelconque des revendications 7 à 9, **caractérisés en ce que** des prépolymères d'allophanate qui contiennent en tant que composant polyol des oxydes de polyalkylène fabriqués sous catalyse DMC sont utilisés en tant qu'isocyanates.

11. Polyuréthanes selon au moins l'une quelconque des revendications 7 à 10, **caractérisés en ce qu'**un prépolymère d'allophanate de formule (I) 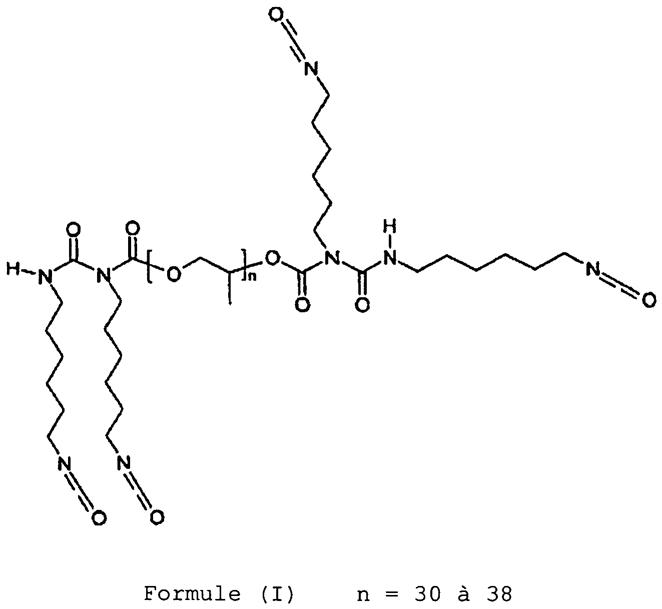 est utilisé en tant qu'isocyanate et/ou **en ce que** le polyuréthane est à base d'un prépolymère, l'oxyde de polypropylène à la base du prépolymère étant fabriqué par catalyse DMC.
